# EUROPÄISCHE PATENTANMELDUNG

(11) **EP 0 922 889 A1**
(43) Veröffentlichungstag der Anmeldung: **16.06.1999**
(21) Anmeldenummer: 98113164.2
(22) Anmeldetag: 15.07.1998
(51) Int. Cl.: F16J 15/32

(54) **Kassettendichtung**

(30) Priorität: 09.12.1997 DE 19754400
(71) Anmelder: Firma Carl Freudenberg, 69469 Weinheim (DE)
(72) Erfinder: Reinhardt, Hans, 69469 Weinheim (DE); Vogt, Rolf, 68723 Oftersheim (DE)

(57) **Zusammenfassung**

Kassettendichtung zur Abdichtung von zwei relativ zueinander verdrehbaren Maschinenelementen (1, 2), umfassend einen ersten Stützkörper (3) mit zumindest einer statisch (4) und zumindest einer dynamisch beanspruchten Dichtung (5), die jeweils aus elastomerem Werkstoff bestehen, wobei die statisch beanspruchte Dichtung (4) drehfest und dichtend an das erste Maschinenelement (1) anlegbar ist und einen als Laufring (6) für die dynamisch beanspruchte Dichtung (5) ausgebildeten und mit dem zweiten Maschinenelement (2) drehfest und dichtend in Eingriff bringbaren zweiten Stützkörper (7). Der zweite Stützkörper (7) ist mit einer sich im wesentlichen in radialer Richtung erstreckenden Schleuderscheibe (8) verbunden.

## Beschreibung

### Technisches Gebiet

Die Erfindung betrifft eine Kassettendichtung, zur Abdichtung von zwei relativ zueinander verdrehbaren Maschinenelementen, umfassend einen ersten Stützkörper mit zumindest einer statisch und zumindest einer dynamisch beanspruchten Dichtung, die jeweils aus elastomerem Werkstoff bestehen, wobei die statisch beanspruchte Dichtung drehfest und dichtend an das erste Maschinenelement anlegbar ist und einen als Laufring für die dynamisch beanspruchte Dichtung ausgebildeten und mit dem zweiten Maschinenelement drehfest und dichtend in Eingriff bringbaren zweiten Stützkörper.

### Stand der Technik

Solche Kassettendichtungen sind allgemein bekannt und gelangen beispielsweise zur Abdichtung von rotierenden Wellen gegenüber Gehäusen zur Anwendung. Der Vorteil von Kassettendichtungen ist, daß der Laufring für die dynamisch beanspruchte Dichtung einen Bestandteil der Kassettendichtung bildet und die für ein möglichst gutes Abdichtungsergebnis während einer langen Gebrauchsdauer erforderliche Oberflächengüte aufweist. Einer zeitund kostenaufwendigen Bearbeitung der Oberfläche der zueinander verdrehbaren Maschinenelemente, zur Herstellung einer Lauffläche für die dynamisch beanspruchte Dichtung, bedarf es daher nicht. Außerdem sind die empfindlichen, dynamisch beanspruchten Dichtlippen innerhalb der Kassettendichtung angeordnet und daher während der Lagerung und/ oder der Montage vor schädlichen äußeren Einflüssen weitgehend geschützt.

### Darstellung der Erfindung

Der Erfindung liegt die Aufgabe zugrunde, eine Kassettendichtung der eingangs genannten Art derart weiterzuentwickeln, daß Leckage des abzudichtenden Mediums und/ oder Kondenswasser, insbesondere bei Verwendung der Kassettendichtung in Waschmaschinen, an zu schützenden Bauteilen, beispielsweise Wälzlagern vorbei in ein Auffangbecken und/ oder die Umgebung abgeleitet werden.

Diese Aufgabe wird erfindungsgemäß bei einer Kassettendichtung der eingangs genannten Art mit dem Merkmal von Anspruch 1 gelöst. Auf vorteilhatte Ausgestaltungen nehmen die Unteransprüche Bezug.

Zur Lösung der Aufgabe ist es vorgesehen, daß der zweite Stützkörper mit einer sich im wesentlichen in radialer Richtung erstreckenden Schleuderscheibe verbunden ist. Die Schleuderscheibe führt - bezogen auf den zweiten Stützkörper - keine Relativbewegung aus. Das zweite Maschinenelement kann beispielsweise durch eine Welle gebildet sein, die in einem Gehäuse gelagert ist. Die Lagerung erfolgt dabei zumeist durch handelsübliche Wälzlager. In Anwendungsfällen, in denen die Temperaturen des abzudichtenden Mediums und/ oder die Temperatur in der Umgebung in kurzen Abständen erheblich schwankt, beispielsweise in Waschmaschinen, entsteht auch außerhalb des abzudichtenden Raums Kondenswasser, das im Hinblick auf eine lange Gebrauchsdauer von den Lagern fernzuhalten ist. Mit zunehmender Gebrauchsdauer neigen Kassettendichtungen, insbesondere bei einer Verwendung in Waschmaschinen dazu, aufgrund von Relaxationserscheinungen und/ oder der permanenten Beaufschlagung mit Waschlauge, das abzudichtende Medium aus dem abzudichtenden Raum an den dynamischen Dichtungen vorbei in Richtung des Wälzlagers gelangen zu lassen. Durch die erfindungsgemäße Ausgestaltung der Kassettendichtung wird das Lager geschützt, da das Kondenswasser und/ oder die Waschlaugen-Leckage durch die Schleuderscheibe gezielt am Lager vorbei abgeführt wird.

Durch die erfindungsgemäße Kassettendichtung besteht die Möglichkeit, preisgünstig verfügbare, gängige Wälzlager zu verwenden, die nicht über spezielle und dadurch teuere Dichtungseinrichtungen verfügen. Die Lebensdauer des Lagers ist trotzdem auch unter Extrembedingungen hoch.

Der zweite Stützkörper kann auf der dem zweiten Maschinenelement zugewandten Seite mit einem Dichtkörper aus elastomerem Werkstoff verbunden sein. Der zweite Stützkörper ist dem zweiten Maschinenelement mit radialem Abstand benachbart zugeordnet, wobei indem durch den Abstand gebildeten, kreisringförmigen Spalt der Dichtkörper angeordnet ist. Der Dichtkörper berührt das zweite Maschinenelement statisch mit radialer Vorspannung dichtend und kann, zur Verbesserung des Abdichtungsergebnisses, beispielsweise eine sich in axialer Richtung erstreckende, wellenförmige Oberflächenprofilierung aufweisen.

Die Schleuderscheibe weist bevorzugt einen Axialvorsprung auf, der den Dichtkörper 7 untergreift. Hierbei ist von Vorteil, daß der zweite Stützkörper und die Schleuderscheibe durch den Dichtkörper gegeneinander abgedichtet sind. Außerdem können geringe Durchmessertoleranzen des Laufrings, bezogen auf den Axialvorsprung, durch den in radialer Richtung elastisch nachgiebigen Dichtkörper ausgeglichen werden. Die Schleuder-scheibe besteht bevorzugt aus einem metallischen, gegen das abzudichtende Medium resistenten Werkstoff. Davon abweichende Werkstoffe, beispielsweise polymeren Werkstoffe, können zur Herstellung der Schleuderscheibe ebenfalls zur Anwendung gelangen.

Zur Erzielung guter Gebrauchseigenschaften und eines sicheren Schutzes von Bauteilen außerhalb des abzudichtenden Raums vor Flüssigkeitsbeaufschlagung, beispielsweise eines Lagers, hat es sich als vorteilhaft bewährt, wenn die Schleuderscheibe eine radiale Höhe aufweist, die zumindest der radialen Höhe eines abzudichtenden Lagers entspricht. Dadurch, daß sich die Schleuderscheibe zusammen mit dem zweiten Stützkörper um die Rotationsachse der Kassettendichtung und relativ zum Lagergehäuse bewegt, werden Flüssigkeitsbestandteile, beispielsweise Waschlaugen-Leckage aus dem abzudichtenden Raum und/ oder Kondenswasser beim Auftreffen auf die Schleuderscheibe am Einbauraum des Lagers vorbeigeleitet.

Das Lagergehäuse umschließt den Außenumfang der Schleuderscheibe bevorzugt mit einem radialen Abstand, wobei der durch den Abstand gebildete Spalt von kapilaraktiver Enge ist und dadurch eine Labyrinthdichtung bildet. Das Lager ist dadurch vor einer schädlichen Flüssigkeitsbeaufschlagung in ausgezeichneter Weise geschützt.

Gemäß einer vorteilhaften Ausgestaltung kann es vorgesehen sein, daß der Radialvorsprung der Schleuderscheibe auf der dem ersten Maschinenelement zugewandten Seite axial in Richtung des ersten Stützkörpers gekröpft ausgebildet ist. Eine derartige Ausgestaltung der Schleuderscheibe ist insbesondere dann sinnvoll, wenn das zu schützende Bauteil durch ein Wälzlager gebildet ist. Der mit dem zweiten Maschinenelement umlaufende Lagerring berührt mit seiner axialen Stirnseite die Schleuderscheibe relativ unverdrehbar und ist beispielsweise gegen den zweiten Stützkörper verspannt. Der zweite Stützkörper, die Schleuderscheibe und der Lagerring bewegen sich gemeinsam um die Rotationsachse. Demgegenüber ist der radial gegenüberliegende Lagerring drehfest im Lagergehäuse angeordnet und ist, bezogen auf die Schleuderscheibe, relativ verdrehbar. Die gekröpfte Form ist erforderlich, um eine Berührung der Schleuderscheibe am gegenüberliegenden Lagerring zu vermeiden, wenn die Stirnseiten der beiden Lagerringe in einer Radialebene angeordnet sind. Bei einfachen, kostengünstig verfügbaren Standardlagern ist dies zumeist der Fall.

Die Schleuderscheibe und die Stirnseite des Lagergehäuses sind bevorzugt in einer Radialebene angeordnet, da die vom Lager fernzuhaltende Feuchtigkeit dadurch strömungsgünstig abgeleitet werden kann.

Der zweite Stützkörper kann einen im wesentlichen C-förmigen Querschnitt aufweisen, wobei der dynamisch beanspruchten Dichtung auf der dem abzudichtenden Raum zugewandten Seite zumindest eine erste Vorschaltdichtung mit axialem Abstand benachbart zugeordnet ist, die den Laufring dichtend umschließt. Die erste Vorschaltdichtung weist bevorzugt zumindest eine Dichtlippe auf, die radial außenseitig von einem einstückig und materialeinheitlich ausgebildeten Elastomerwulst umschlossen ist. Durch die wulstförmige Materialanhäufung bedarf es keiner zusätzlichen Feder, beispielsweise einer Ringwendelfeder, um die erste Vorschaltdichtung mit gleichbleibender radialer Vorspannung während der gesamten Gebrauchsdauer dichtend an den Laufring zu drücken. Die Kassettendichtung besteht insgesamt nur aus wenigen Teilen, ist dadurch in fertigungstechnischer und wirtschaftlicher Hinsicht einfach und kostengünstig herstellbar, und die Gefahr von Montagefehlern ist auf ein Minimum begrenzt.

Um einerseits die dynamische Dichtwirkung weiter zu verbessern und andererseits eine Möglichkeit zu schaffen, daß vom abzudichtenden Raum zur ersten Vorschaltdichtung gelangte Flüssigkeitsbestandteile wieder in Richtung des abzudichtenden Raums zurückgelangen können, kann der dem ersten Maschinenelement zugewandte Axialschenkel des zweiten Stützkörpers mit einer zweiten Vorschaltdichtung einen in axialer Richtung offenen, V-förmigen Spalt begrenzen, wobei der Spalt einen sich axial in Richtung der Schleuderscheibe erweiternden Querschnitt aufweist. Die einander zugewandten Flächen der zweiten Vorschaltdichtung und des Axialschenkels sind dabei bevorzugt symmetrisch zu einer gedachten, sich in axialer Richtung erstreckenden Ebene ausgebildet, die sich parallel zur Rotationsachse der Kassettendichtung erstreckt. Die Dichtlippe der zweiten Vorschaltdichtung ist dem Axialschenkel mit radialem Abstand benachbart zugeordnet und bildet mit diesem eine Labyrinthdichtung. Die Beaufschlagung der ersten Vorschaltdichtung durch die Labyrinthdichtung mit abzudichtendem Medium ist sehr gering, wobei das in Richtung der ersten Vorschaltdichtung eingedrungene, abzudichtende Medium problemlos wieder in Richtung des abzudichtenden Raums ablaufen kann.

Die dynamisch beanspruchte Dichtung, die erste und die zweite Vorschaltdichtung können einstückig ineinander übergehend und materialeinheitlich ausgebildet sein. Die Herstellung ist dadurch besonders einfach, daß die Dichtungen in einem Arbeitsgang gleichzeitig an den ersten Stützkörper angeformt werden.

Die statisch beanspruchte Dichtung weist bevorzugt zumindest eine Leckageleitung auf, die den von der dynamisch beanspruchten Dichtung, dem ersten Stützkörper und der Schleuderscheibe begrenzten Hohlraum mit der Umgebung verbindet.

Der erste Stützkörper kann einen Axialflansch und einen Radialflansch aufweisen, wobei auf der dem Axialflansch abgewandten Seite des Radialflanschs die dynamisch beanspruchte Dichtung angeordnet ist und wobei die statisch beanspruchte Dichtung den Axialflansch zumindest teilweise umschließt. Die Leckageleitung kann beispielsweise durch Ausnehmungen in der statisch beanspruchten Dichtung gebildet sein, wobei der elastomere Werkstoff, der den Axialflansch ummantelt, auf der dem Hohlraum zugewandten Seite mit zumindest einer sich in axialer Richtung erstreckenden Nut versehen sein kann, die in einen Radialdurchbruch mündet, der sich in radialer Richtung an der Stirnseite des Axialflanschs vorbei in Richtung der Umgebung erstreckt.

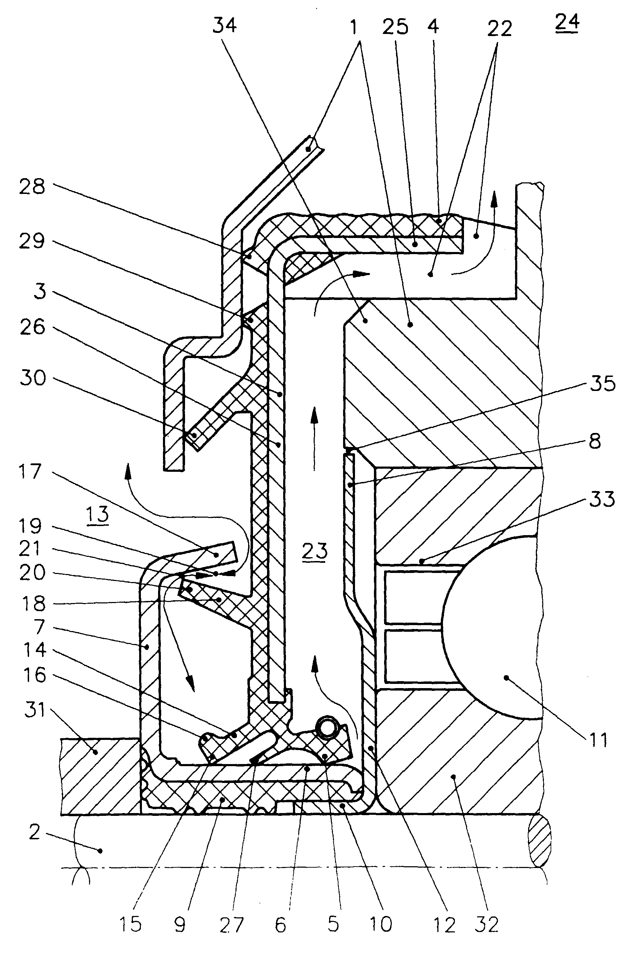

### Kurzbeschreibung der Zeichnung

Ein Ausführungsbeispiel einer erfindungsgemäßen Kassettendichtung wird nachfolgend anhand der in der Figur dargestellten Dichtungsanordnung näher erläutert.

### Ausführung der Erfindung

In der Figur ist ein Ausführungsbeispiel gezeigt, bei dem eine Kassettendichtung zur Abdichtung des Lagers 11 einer Waschmaschine zur Anwendung gelangt.

In diesem Ausführungsbeispiel ist das erste Maschinenelement 1 durch das Gehäuse der Waschmaschine gebildet und das zweite Maschinenelement 2 durch eine Welle, die die Waschtrommel der Waschmaschine antreibt. Die Lagerung des zweiten Maschinenelements 2 im ersten Maschinenelement 1 erfolgt durch das Lager 11, das in diesem Fall durch ein handelsübliches Rillenkugellager gebildet ist.

Innerhalb des abzudichtenden Raums 13 befindet sich während des Betriebs der Waschmaschine Wasser oder Waschlauge. Das Lager 11 wird durch die Kassettendichtung geschützt.

In der Waschmaschine bildet sich während ihres Betriebs außerdem Kondenswasser, auch auf der dem abzudichtenden Raum 13 abgewandten Seite der dynamischen Dichtung 5 innerhalb des Hohlraums 23.

Die erfindungsgemäße Kassettendichtung ist mit allen erforderlichen Dichtungen 4, 5, 9, 14, 18, 21 versehen, um gute Gebrauchseigenschaften des abzudichtenden Lagers 11 während einer langen Gebrauchsdauer der Waschmaschine sicherzustellen. Die Schleuderscheibe 8, die einen Bestandteil der Kassettendichtung bildet, besteht in diesem Ausführungsbeispiel aus einem metallischen Werkstoff.

Die Kassettendichtung besteht im wesentlichen aus dem ersten 3 und dem zweiten Stützkörper 7, die in diesem Ausführungsbeispiel jeweils durch einen Blechring gebildet sind, wobei am ersten Stützkörper 3 sowohl dynamisch beanspruchte Dichtungen 5, 14, 18, 27 als auch statisch beanspruchte Dichtungen 4, 28, 29 und 30 angeordnet sind.

Die dynamisch beanspruchten Dichtungen 5, 14 und 27 umschließen den Laufring 6 unter radialer Vorspannung dichtend, während die Dichtlippe 20 der zweiten Vorschaltdichtung 18 vom Axialschenkel 17 des zweiten Stützkörpers 7 mit radialem Abstand außenseitig umschlossen ist. Der radiale Abstand ist derart bemessen, daß der Spalt zwischen der Dichtlippe 20 und dem Axialschenkel 17 von kapilaraktiver Enge ist.

Die statisch beanspruchte Dichtung 4 berührt das erste Maschinenelement 1 unter elastischer Vorspannung, wobei die statisch beanspruchten Dichtungen 30, 29, 28 in einer funktionstechnischen Reihenschaltung angeordnet sind.

In diesem Ausführungsbeispiel bestehen alle dynamisch beanspruchten und statisch beanspruchten Dichtungen, die am ersten Stützkörper 3 festgelegt sind, aus dem selben Elastomerwerkstoff und sind einstückig ineinander übergehend ausgebildet.

Davon abweichende Ausgestaltungen sind ebenfalls denkbar, beispielsweise, daß alle dynamisch beanspruchten Dichtungen 5, 14, 18, 27 aus dem selben Elastomerwerkstoff bestehen und die statisch beanspruchten Dichtungen 4, 28, 29, 30 aus einem davon abweichenden Werkstoff.

Die Kassettendichtung wird durch die Buchse 31 in axialer Richtung gegen die Schleuderscheibe 8 und den Innenring 32 des Lagers 11 verspannt, wobei die Abdichtung durch den Dichtkörper 9 erfolgt, der an den Innenumfang des zweiten Stützkörper 7 anvulkanisiert ist. Der zweite Stützkörper 7 und die Schleuderscheibe 8 sind drehfest miteinander verbunden, wobei die Schleuderscheibe 8 den Dichtkörper 9 des zweiten Stützrings 7 mit ihrem Axialvorsprung 10 untergreift.

Da sich der Innenring 32 und der Außenring 33 des Lagers 11 während der bestimmungsgemäßen Verwendung der Waschmaschine relativ zueinander verdrehen und die Schleuderscheibe 8 die der Kassettendichtung zugewandte Stirnseite des Innenrings 32 anliegend berührt, ist die Schleuderscheibe 8 etwa in der Mitte ihrer radialen Erstreckung in Richtung des ersten Stützkörpers 3 gekröpft und dem Außenring 33 des Lagers 11 daher mit axialem Abstand benachbart zugeordnet.

Das Lagergehäuse 34, das einen Bestandteil des ersten Maschinenelements 1 bildet, umschließt den Außenumfang der Schleuderscheibe 8 mit einem sehr geringen radialen Abstand, wobei der durch den Abstand gebildete Spalt 35 von kapilaraktiver Enge ist. Die dem ersten Stützkörper 3 zugewandten Stirnseiten des Lagergehäuses 34 und der Schleuderscheibe 8 sind in einer Radialebene angeordnet.

Durch die Pfeile wird die Bewegung des Wassers/ der Waschlauge und/ oder des Kondenswassers symbolisch dargestellt. Das Wasser/ die Waschlauge kann vom abzudichtenden Raum 13 durch den V-förmigen Spalt 19 an der Dichtlippe 20 der zweiten Vorschaltdichtung 18 vorbei in Richtung der ersten Vorschaltdichtung 14 gelangen. Durch den Elastomerwulst 16 ist eine separat erzeugte Feder, beispielsweise eine Ringwendelfeder entbehrlich und die Dichtlippe 15 der ersten Vorschaltdichtung 14 umschließt den Laufring 6 während der gesamten Gebrauchsdauer der Kassettendichtung mit gleichbleibender, radialer Vorspannung dichtend.

Dadurch, daß die Dichtlippe 20 der zweiten Vorschaltdichtung 18 den Axialschenkel 17 nicht anliegende berührt, vermag die in Richtung der ersten Vorschaltdichtung 14 eingedrungene Flüssigkeit auch wieder in Richtung des abzudichtenden Raums 13 zu entweichen.

Das innerhalb des Hohlraums 23 entstehende Kondenswasser und/ oder Waschlauge, die als Leckage an den dynamisch beanspruchten Dichtungen 14, 27 und 5 vorbei in den Hohlraum 23 eingedrungen ist, wird durch die Rotation des zweiten Maschinenelements 2 und die entsprechende Bewegung der Schleuderscheibe 8 am Spalt 35 vorbei durch die Leckageleitung 22 in Richtung Umgebung 24 abgeführt. Die Leckageleitung 22 ist durch Ausnehmungen im Elastomerwerkstoff der statisch beanspruchten Dichtung 4 gebildet.

## Patentansprüche

1. Kassettendichtung zur Abdichtung von zwei relativ zueinander verdrehbaren Maschinenelementen, umfassend einen ersten Stützkörper mit zumindest einer statisch und zumindest einer dynamisch beanspruchten Dichtung, die jeweils aus elastomerem Werkstoff bestehen, wobei die statisch beanspruchte Dichtung drehfest und dichtend an das erste Maschinenelement anlegbar ist und einen als Laufring für die dynamisch beanspruchte Dichtung ausgebildeten und mit dem zweiten Maschinenelement drehfest und dichtend in Eingriff bringbaren zweiten Stützkörper, **dadurch gekennzeichnet**, daß der zweite Stützkörper (7) mit einer sich im wesentlichen in radialer Richtung erstreckenden Schleuderscheibe (8) verbunden ist.

2. Kassettendichtung nach Anspruch 1, dadurch gekennzeichnet, daß der zweite Stützkörper (7) auf der dem zweiten Maschinenelement (2) zugewandten Seite mit einem Dichtkörper (9) aus elastomerem Werkstoff verbunden ist.

3. Kassettendichtung nach einem der Ansprüche 1 oder 2, dadurch gekennzeichnet, daß die Schleuderscheibe (8) einen Axialvorsprung (10) aufweist, der den Dichtkörper (7) untergreift.

4. Kassettendichtung nach einem der Ansprüche 1 bis 3, dadurch gekennzeichnet, daß die Schleuderscheibe (8) eine radiale Höhe aufweist, die zumindest der radialen Höhe eines abzudichtenden Lagers (11) entspricht.

5. Kassettendichtung nach einem der Ansprüche 1 bis 4, dadurch gekennzeichnet, daß der Radialvorsprung (12) der Schleuderscheibe (8) auf der dem ersten Maschinenelement (1) zugewandten Seite axial in Richtung des ersten Stützkörpers (3) gekröpft ausgebildet ist.

6. Kassettendichtung nach einem der Ansprüche 1 bis 5, dadurch gekennzeichnet, daß der zweite Stützkörper (7) einen im wesentlichen C-förmigen Querschnitt aufweist und daß der dynamisch beanspruchten Dichtung (5) auf der dem abzudichtenden Raum (13) zugewandten Seite zumindest eine erste Vorschaltdichtung (14) mit axialem Abstand benachbart zugeordnet ist, die den Laufring (6) dichtend umschließt.

7. Kassettendichtung nach Anspruch 6, dadurch gekennzeichnet, daß die erste Vorschaltdichtung (14) zumindest eine Dichtlippe (15) aufweist, die radial außenseitig von einem Elastomerwulst (16) umschlossen ist und daß der Elastomerwulst (16) einstückig und materialeinheitlich mit der Dichtlippe (15) ausgebildet ist.

8. Kassettendichtung nach einem der Ansprüche 1 bis 7, dadurch gekennzeichnet, daß der dem ersten Maschinenelement (1) zugewandte Axialschenkel (17) des zweiten Stützkörpers (7) mit einer zweiten Vorschaltdichtung (18) einen in axialer Richtung offenen, V-förmigen Spalt (19) begrenzt und daß der Spalt (19) einen sich axial in Richtung der Schleuderscheibe (8) erweiternden Querschnitt aufweist.

9. Kassettendichtung nach Anspruch 8, dadurch gekennzeichnet, daß die Dichtlippe (20) der zweiten Vorschaltdichtung (18) dem Axialschenkel (17) mit radialem Abstand benachbart zugeordnet ist und mit diesem eine Labyrinthdichtung (21) bildet.

10. Kassettendichtung nach einem der Ansprüche 1 bis 9, dadurch gekennzeichnet, daß die dynamisch beanspruchte Dichtung (5), die erste (14) und die zweite Vorschaltdichtung (18) einstückig ineinander übergehend und materialeinheitlich ausgebildet sind.

11. Kassettendichtung nach einem der Ansprüche 1 bis 10, dadurch gekennzeichnet, daß die statisch beanspruchte Dichtung (4) zumindest eine Leckageleitung (22) aufweist, die den von der dynamisch beanspruchten Dichtung (5), dem ersten Stützkörper (3) und der Schleuderscheibe (8) begrenzten Hohlraum (23) mit der Umgebung (24) verbindet.

12. Kassettendichtung nach einem der Ansprüche 1 bis 11, dadurch gekennzeichnet, daß der erste Stützkörper (3) einen Axialflansch (25) und einen Radialflansch (26) aufweist, daß auf der dem Axialflansch (25) abgewandten Seite des Radialflanschs (26) die dynamisch beanspruchte Dichtung (5) angeordnet ist und daß die statisch beanspruchte Dichtung (4) den Axialflansch (25) zumindest teilweise umschließt.
